(19) **Europäisches Patentamt**

**European Patent Office**

**Office européen des brevets**

(11) **EP 1 370 456 B1**

(12) **EUROPEAN PATENT SPECIFICATION**

(45) Date of publication and mention
of the grant of the patent:
**19.07.2006 Bulletin 2006/29**

(51) Int Cl.:
***B62D 6/00*** (2006.01)

(21) Application number: **02718296.3**

(22) Date of filing: **20.03.2002**

(86) International application number:
**PCT/GB2002/001333**

(87) International publication number:
**WO 2002/074607 (26.09.2002 Gazette 2002/39)**

(54) **A vehicle steering system having oversteer assistance**

Fahrzeuglenksystem mit Übersteuerkorrektur Assistent

Direction de vehicule avec assistance pour lutter contre le survirage

(84) Designated Contracting States:
**AT BE CH CY DE DK ES FI FR GB GR IE IT LI LU
MC NL PT SE TR**

(30) Priority: **20.03.2001 GB 0106924**

(43) Date of publication of application:
**17.12.2003 Bulletin 2003/51**

(73) Proprietor: **Lucas Industries Limited
West Midlands B90 4LA (GB)**

(72) Inventors:
• **BARTON, Andrew Dennis
Balsall Common,
Coventry CV7 7PR (GB)**
• **FARRELLY, James Owen Patrick
Kenilworth,
Warwickshire CV8 2HE (GB)**
• **ALFORD, Nicholas
56077 Koblenz (DE)**

(74) Representative: **W.P. Thompson & Co.
Coopers Building
Church Street
Liverpool L1 3AB (GB)**

(56) References cited:
**DE-A- 19 832 484        DE-C- 4 123 235
US-A- 5 528 497**

## Description

The present invention relates to a vehicle dynamic control system of the type that employs an electrically assisted steering system (EAS) and has means to counter the effects of vehicle oversteer.

EAS systems are well known in the art. Electric assist steering systems that use, for example, a rack and pinion gear set to couple the steering column to the steered axle provide power assist by using an electric motor to either apply rotary force to a steering shaft connected to a pinion gear, or apply linear force to a steering member having rack teeth thereon. The electric motor in such systems is typically controlled in response to (a) driver's applied torque to the steering wheel, and (b) sensed vehicle speed.

Other known electric assist steering systems include electro-hydraulic systems in which the power assist is provided by hydraulic means under at least partial control of an electronic control system.

Oversteer is the tendency of a vehicle to steer into a sharper turn than the driver intends and where there can be a thrusting of the rear of the vehicle outwardly of the bend, causing the rear of the car to start to slide due to the rear tyres losing lateral traction. This type of event is considered the most dangerous condition for a vehicle to be in and frequently results in the vehicle spinning out of control. Vehicle Stability Control (VSC) systems have been developed that prevent this by selectively applying the brakes at individual wheels. Such systems are expensive and therefore only suited for fitment to higher end cars, whereas power steering systems are now fitted to almost all types of vehicle. Therefore an oversteer assistance system that could use the steering system would not only assist VSC in stabilizing the vehicle, but would also be of more widespread application.

US-A-5 528 497 that forms the closest prior art discloses a vehicle steering control system wherein an actuating torque is applied to steerable wheels according to a steering torque applied to a steering wheel in a conventional manner, and an additional actuating torque is applied to the steering wheel by an electric motor according to lateral dynamic conditions of the vehicle so as to control the lateral stability of the vehicle even in the presence of external interferences such as crosswind. Such external interferences are detected as a lateral dynamic condition of the vehicle such as the yaw rate of the vehicle, and the steering control system produces a steering reaction which counteracts such a lateral dynamic condition by applying the additional actuating torque to the steerable wheels so that the vehicle may maintain a straight course in spite of such external interferences without requiring intentional efforts by the vehicle operator.

The objects of US-A-5 528 497 all involve controlling the deviation of the vehicle from an intended path of travel, even when the vehicle is subjected to disturbances such as crosswind, and to this end employs a system gain which varies directly with the steering angle whereby it is a maximum at zero steering angle, reducing to zero as the steering angle is increased. Thus in a typical oversteer situation, ie at speed and with significant steering angle applied, the technique of US-A-5 528 497 would not function to provide appropriate assistance to the driver in correcting the oversteer condition.

DE-4123 235C discloses a method and apparatus for preventing instabilities in vehicle handling by forming a desired value of the vehicle yaw angle rate $\mu_{des}$ from measured values (namely, vehicle speed, steering wheel angle), and forming the actual value of the vehicle yaw angle rate $\mu_{act}$ from at least one sensor signal. The difference between the desired value of the yaw angle rate $\mu_{der}$ and the actual value of the yaw angle rate $\mu_{act}$ is formed by subtracting the actual value of the yaw angle rate $\mu_{act}$ from the desired value of the yaw angle rate $\mu_{dek}$. An output signal is generated and emitted by a computer unit from this difference. The output signal represents the detected driving situation with respect to the yaw behavior of the vehicle with the brake pressure of individual wheels of the vehicle being varied as a function of this output signal, and the output signal being generated in the computer unit as a function of a time derivative of the difference. The output signal contains information on whether the vehicle has understeering or oversteering handling. In the case of oversteering handling, the brake pressure is increased for the vehicle front wheel on the outside of the turn; in the case of understeering handling, the brake pressure is increased for the vehicle rear wheel on the inside of the turn.

Thus, the system of DE-4123 235C is concerned with responding to an oversteer situation not by using the steering system but rather by controlling the vehicle brakes.

DE 198 32 484A is concerned with a method and device for detecting, inter alia, over-steered cornering as well as a method and device for stabilizing a vehicle in the course of an oversteered cornering manoeuvre. The method comprises determining wheel speeds of several wheels based on wheel speed signal values and determining slip values of these wheels, and detecting cornering with reference to several of the determined slip values, wherein at least one of the wheel speed signal values and the slip values are averaged or integrated over a minimum period of time between 250 and 500 ms. Thus, an oversteer condition is detected with reference to wheel slip values and/or transverse acceleration values. However, the stabilization is carried out by means of suitable intervention in the brake system, as in the case of DE-4123235C. Thus, DE-198 32 484A is concerned essentially with a braking system and not with a steering system for its response to oversteering conditions.

It is therefore an object of the present invention to use the power steering system to aid the driver in stabilizing the vehicle during an oversteer condition. According to the present invention there is provided a vehicle steering system comprising:

oversteer estimation means to determine whether the vehicle is experiencing an oversteer condition; steering control means to determine a compensatory torque so as to support the driver in reducing the vehicle yaw rate to zero and thereby in removing the oversteer condition; and
activation means enabled when said oversteer condition is detected to fade in and fade out said compensatory torque so as to achieve a bumpless transfer of additional torque demand that is applied to the driver's steering demand.

An algorithm is provided that uses measurements of the vehicle dynamic state to determine a steer correction suitable to stabilize a vehicle in oversteer, this steer correction being applied to the vehicle via the normal power assisted steering system.

Preferably, the oversteer estimation means is adapted to derive an estimation of the tendency of the vehicle to oversteer based upon measurements the measured or derived vehicle yaw rate, and/or, lateral acceleration, and/or steering wheel angle, and/or lateral acceleration and/or slip angle.

Such data is readily available from known ABS systems of the VSC (Vehicle Stability Control) type where stability of the vehicle is further enhanced through selective application of the vehicle braking system.

Preferably, the oversteer estimation means is adapted to derive the estimation of the tendency of the vehicle to oversteer based upon estimates of vehicle yaw rate which are compared with measurements of actual vehicle yaw rate to provide a yaw rate error which is used as a measure of oversteer present on the vehicle.

In one advantageous embodiment, the steering controller includes a closed loop observer having yaw rate feedback which is arranged such that, when the vehicle starts to oversteer, a non-linear region is entered and the previously existing linear estimate diverges from the feedback signal whereby the magnitude of the vehicle yaw rate is greater than the magnitude of the estimated yaw rate, thereby producing a negative yaw rate error which is used to generate a proportional signal indicative of the magnitude of the oversteer.

Preferably, the oversteer estimation means is adapted to derive an estimation of the tendency of the vehicle to oversteer using measurements from lateral acceleration sensors placed in the front and rear axles of the vehicle.

In one embodiment, signals corresponding to the lateral accelerations measured at the front and rear axles are passed through a phase detection device, the phase difference being used for calculation of the magnitude of oversteer.

Conveniently, the state of the vehicle is formed from $\lambda = \Theta_{th}\Theta$ where $\lambda$ is the vehicle states $\theta_{th}$ is a phase

lag threshold and $\theta$ is the phase difference between the two lateral acceleration sensors, positive values of $\lambda$ indicating that the vehicle is in oversteer and $\lambda$ is proportional to the amount of oversteer present.

In other embodiments, the oversteer estimation means can be adapted to derive an estimation of the tendency of the vehicle to oversteer based upon two vehicle models representing an understeering and an oversteering vehicle which are compared to provide an indication of vehicle oversteer magnitude.

Advantageously, the difference in dynamics between the two models is achieved by altering the tyre cornering stiffnesses in the models, reducing the front tyre stiffness in one model creating an understeering vehicle and reducing the rear tyre stiffness in the other model creating an oversteering vehicle, and composing comparators which calculate the error between the measured lateral acceleration and estimated lateral acceleration at that axle for each model, based on:

$$\lambda_r = \left| A_{fm} - A_{fu} \right| - \left| A_{fm} - A_{fo} \right|$$

where

$A_{fn}$ = Front Axle Lat Acc Estimated from Understeer Model
$A_{rn}$ = Rear Axle Lat Acc Estimated from Understeer Model
$A_{fo}$ = Front Axle Lat Acc Estimated from Oversteer Model
$A_{ro}$ = Rear Axle Last Acc Estimated from Overstreer Model
$A_{fm}$ = Front Axle Lat Acc Measured from Sensor
$A_{rm}$ = Rear Axle Lat Acc Measured from Sensor

this giving two values for the vehicle state which are added together to produce an overall vehicle stability factor $\lambda$, positive values of which are indicative of vehicle oversteer.

In still further embodiments, the oversteer estimation means is adapted to derive an estimation of the tendency of the vehicle to oversteer based upon a percentage of the VSC threshold at which brake intervention for oversteer occurs.

Advantageously, the steering control means is adapted to control the steering by applying a pulse input or "nudge" to indicate to the driver the correct time and direction to apply steering control.

In one embodiment, a signal is arranged to be generated in a nudge controller if the vehicle yaw rate error is detected to be greater than a predetermined threshold, this signal being used to trigger a latch, the output of which sets an integrator ramping, said signal also being used to generate a torque demand signal which is fed to the steering system to initiate the start of the "nudge", saturation of the integrator resetting the latch and ending the "nudge".

Advantageously, the steering control means is adapted to control the steering by means of closed loop control of the steering wheel velocity.

In one embodiment, a PD controller is implemented on the vehicle yaw rate error to generate a steering rate demand which is compared with a scaled version of the steering wheel velocity to produce an error signal, a second PD controller then providing a signal which attempts to move the steeling wheel with a desired direction and velocity to correct the oversteer.

The activation means can be adapted to fade in the compensatory torque when it has decided that the oversteer has exceeded limits and to fade the compensatory torque out once the oversteer has returned to an acceptable value.

Preferably, the activation means comprises activation logic which is adapted to control the point at which the steering control means starts, deactivation logic which detects conditions for deactivation of the steering control means, and a fade control which fades the inputs and outputs from the steering control means in and out as the steering control means is switched on and off.

Advantageously, the activation logic comprises a threshold oversteer value and a latch arranged such that when the oversteer signal exceeds the threshold, the latch is set and remains set until a deactivation flag triggers a reset.

The fade control can comprise an integrator which, upon detection of an activation flag being high, is arranged to ramp up to allow the torque generated by the steering control means to be gradually added to the steering system but which, on detection of the activation flag becoming low, ramps down to gradually remove the effect of the compensatory torque from the steering system

The invention is described further hereinafter, by way of example only, with reference to the accompanying drawings, in which:-.

Fig. 1 is an overall system block diagram of one embodiment of an oversteer steering assistance controller in a vehicle steering system in accordance with this invention:
Fig. 2 illustrates how yaw rate is estimated;
Fig. 3 illustrates oversteer estimation by Phase Detection;
Fig. 4 illustrates oversteer estimation by Model Comparison;
Fig. 5 is a block diagram of a "nudge" controller;
Fig. 6 is a block diagram of a steering wheel rate controller;
Fig. 7 is an overall block diagram of activation logic;
Fig. 8 is a block diagram of the activation logic;
Fig. 9 is a block diagram showing deactivation logic;
Fig.10 is a block diagram of a fade control arrangement;
Fig. 11 shows an alternative steering controller; and

Fig. 12 shows a means of establishing slip angle.

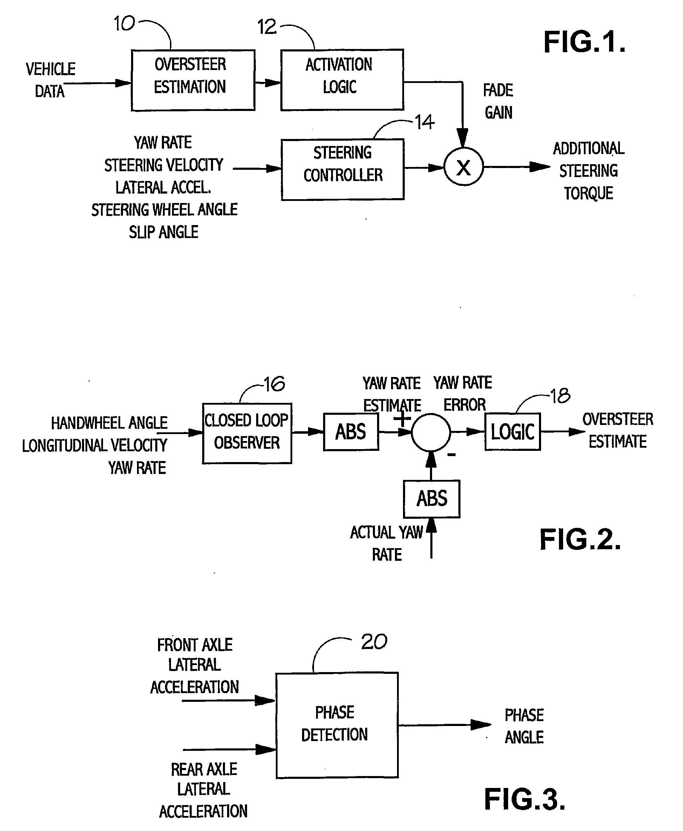

Referring first to Fig. 1, the oversteer steering assistance controller comprises three sections, namely:

Oversteer Estimation. The Oversteer Estimation 10 attempts to estimate the amount of oversteer that the vehicle is currently experiencing.
Steering controller. Based on the amount of oversteer, the Steering Controller 14 generates an input to the steering system to assist the driver in correction.
Activation Control. The Activation Control/Logic 12 fades the controller in when it has determined that the oversteer has exceeded limits. It also controls the fading out of the controller once the oversteer and other vehicle parameters have returned to acceptable values.

Oversteer Estimation

(a) Integrated Estimation - VSC ICC Oversteer/Understeer Signal

The Integrated Chassis System VSC code produces a measure of the vehicle understeer or oversteer. -100% is the point where brake intervention occurs to counter a severe understeer. 0% is the vehicle operating without any understeer or oversteer. +100% indicates the initiation of brake intervention to prevent a severe oversteer.

For the purposes of oversteer control, only positive values are taken, all negative values are ignored. There is no requirement for a limiter as the signal is inherently limited to 100%.

(b) Dynamic Estimation

The dynamic estimator is a closed loop observer 16 with yaw rate feedback, estimating yaw rate, as illustrated in Fig. 2. When the vehicle starts to oversteer, a non-linear region is entered and the linear estimate diverges from the feedback signal. In this condition, the magnitude of the vehicle yaw rate is greater than the magnitude of the estimated yaw rate, producing a negative yaw rate error. A logic block 18 detects the negative yaw rate error and outputs a signal that is proportional to the magnitude of the yaw rate error. This signal is a measure of the amount of oversteer present on the vehicle.

(c) Dynamic Estimation with Lateral Acceleration

It is possible to estimate the amount of oversteer on the vehicle using two lateral acceleration sensors, one placed on the front axle and one of the rear axle. There are a number of methods of achieving this, as explained hereinafter.

(d) Oversteer Estimation by Phase Detection

As shown in Fig. 3. The lateral accelerations measured at the front and rear axles are passed through a phase detection device 20.

The phase detection device 20 uses a cross correlation to determine the time delay between the two signals. From this, the phase difference can be determined.

Once the phase between the front and rear lateral acceleration signals has been determined, the state of the vehicle can be found from:

$$\lambda = \Theta_{th} - \Theta$$

where $\lambda$ is the vehicle state, $\Theta_{th}$ is a phase lag threshold and $\Theta$ is the phase difference between the two lateral acceleration sensors. In normal driving conditions, the rear axle will tend to lag the front axle and this phase difference is set as the value of $\Theta_{th}$. Therefore, in normal driving $\lambda$ is around 0. As the vehicle starts to oversteer, the lateral acceleration of the rear axle catches up with the front axle, causing $\Theta$ to fall. In high values of oversteer, $\Theta$ can change sign, i.e. the lateral acceleration at the rear axle now leads that at the front axle. It can therefore be seen that positive values of $\lambda$ indicate that the vehicle is in oversteer and $\lambda$ is proportional to the amount of oversteer present on the vehicle.

(e) Oversteer Estimation by Model Comparison

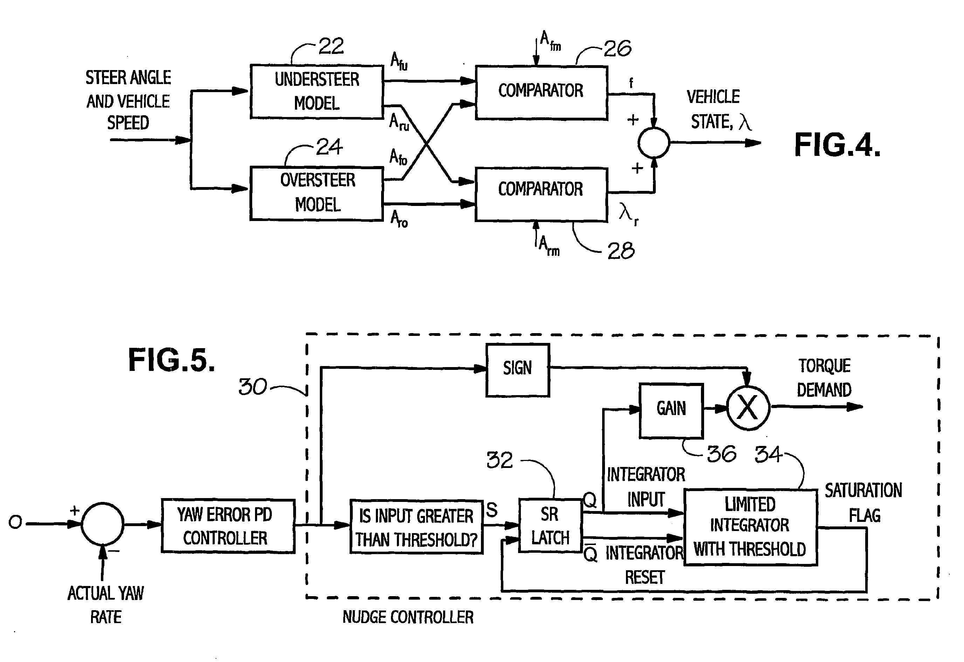

As illustrated in Fig. 4, two vehicle models 22, 24, are created, representing an understeering and oversteering vehicle. The difference in dynamics between the models 22, 24 is achieved by altering the tyre cornering stiffness. Reduction of the front tyre stiffness by around a third creates an understeering vehicle, while a similar reduction for the rear creates oversteer.

Referring to Fig. 4, the following nomenclature applies:

$A_{fu}$ = Front Axle Lat Acc Estimated from Understeer Model

$A_{ru}$ = Rear Axle Lat Acc Estimated from Understeer Model

$A_{fo}$ = Front Axle Lat Acc Estimated from Oversteer Model

$A_{ro}$ = Rear Axle Lat Ace Estimated from Oversteer Model

$A_{fm}$ = Front Axle Lat Acc Measured from Sensor

$A_{rm}$ = Rear Axle Lat Acc Measured from Sensor

Comparators 26 and 28 first calculate the error between the measured lateral acceleration and the estimated lateral acceleration at that axle for each model:

$$\lambda_f = \left| A_{fm} - A_{fu} \right| - \left| A_{fm} - A_{fo} \right|$$

This gives two values for the vehicle state which are added together to produce an overall vehicle stability factor, $\lambda$. For normal straight line driving $\lambda$ should tend to 0. As the vehicle generates more understeer then $\lambda$ becomes negative. If the vehicle moves into oversteer, then $\lambda$ should become positive. Therefore $\lambda$ is proportional to the dynamic state of the vehicle.

Steering Controller

There are two possible methods of controlling the steering. The first is just to apply a pulse input, or a nudge, to indicate to the driver me correct time and direction to apply steering control. The alternative is more comprehensive and applies closed loop control of the steering wheel velocity.

(a) Nudge Control

The nudge control uses a PD control on yaw rate with an additional output block 30 as illustrated in Fig. 5. The additional block 30 does nothing until the torque demand from the yaw rate controller reaches a threshold. Then a torque pulse is generated that is intended to nudge the driver into moving the vehicle in the correct direction.

A '1' is generated in the nudge controller 30 if the yaw rate error is greater than a threshold. This is used to trigger a set/reset latch 32, the output of which sets an integrator 34 ramping. At the same time, the '1' out of the SR latch 32 is scaled by a gain 36 and generates a torque, the start of the nudge. This is given the same sign as the torque error and fed to the steering system. In this implementation, the gain is constant and therefore the torque applied to the steering system is independent of the severity of the oversteer condition. It is possible to make this gain a map, with the index being either the oversteer value, yaw rate, or yaw acceleration. This would then change the amplitude of the steering nudge dependent on manoeuvre. When the integrator 34 saturates, a flag is generated which causes the SR latch 32 to reset. When this occurs, the torque output to the steering system falls to zero ending the nudge, and the integrator 34 is reset. By varying the saturation value on the integrator 34, the duration of the applied steering nudge can be controlled.

(b) Steering Wheel Rate Control

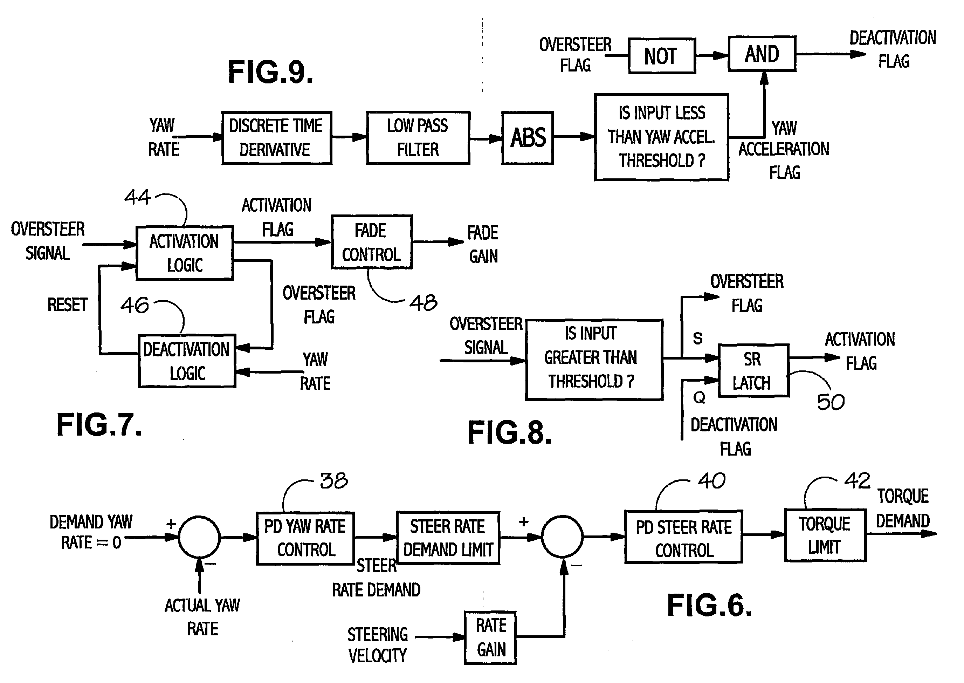

The aim of the closed loop steering wheel velocity controller, shown in Fig. 6 is to attempt to match the yaw rate of the front road wheels with the yaw rate of the vehicle but the opposite sign. This has the effect of causing the vehicle to seemingly pivot about the front wheels.

In all cases described herein, the controller assumes that the driver is effectively attempting to reduce the yaw rate of the vehicle to zero and assists the driver in achieving this. However, if the system was combined with a video sensor capable of providing a heading angle demand, then this input could reflect a yaw rate demand required to keep the vehicle heading in the correct direction. In the first element 38, a PD controller is implemented on the yaw rate error signal to generate a steering rate demand. This is compared with a scaled version of the handwheel velocity to produce an error signal. A final PD controller 40 then attempts to move the handwheel with the desired direction and velocity. A limit 42 prevents the controller applying torques that may lead to excessive handwheel velocities.

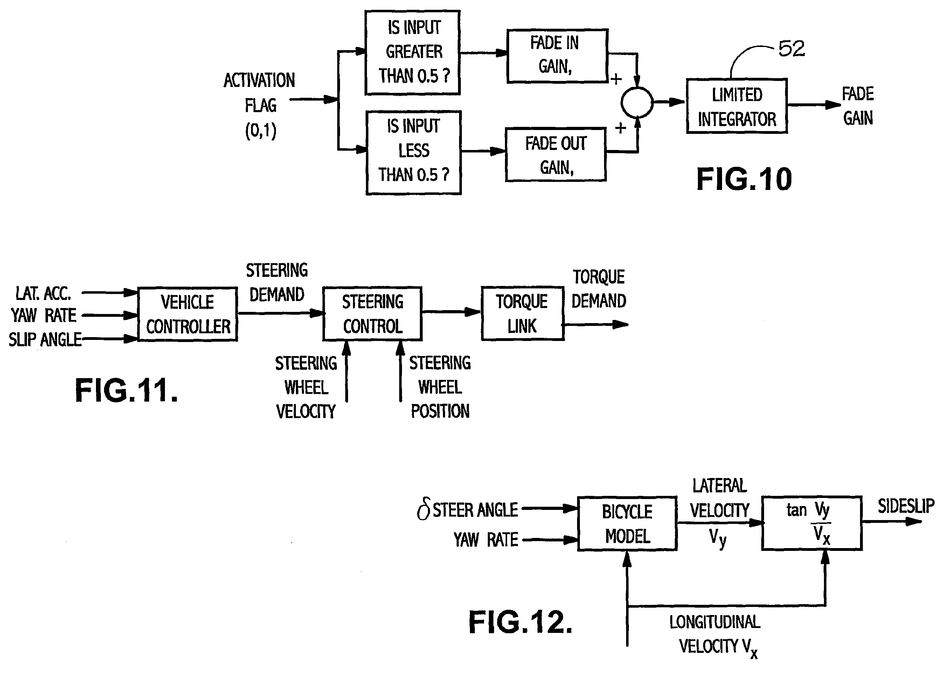

As an alternative to the steering wheel rate controller of Fig. 6, there can be used the steering controller of Fig. 11 which has as one of its inputs a value corresponding to the vehicle side slip. Side slip can be established, by way of example, using the arrangement of Fig. 12. As shown in Fig. 12, side slip cangle can be generated from a combination of steer angle and yaw rate scaled for vehicle longitudinal velocity. The output of this combination when processed according to the bicycle model, produces vehicle lateral velocity. Further comparison of this value with vehicle longitudinal velocity produces a side slip angle which can then be fed into the vehicle controller to produce a steering demand as shown in Fig. 11.

The overall structure of the arrangement of Fig. 11 is substantially the same as for the steering rate controller with side slip as an input. The vehicle controller simply uses the inputs to determine a suitable output which is preferably either steering wheel angle/position. The Vehicle Controller itself can be one of a P, P+D, P+1+D, pole placement, frequency response commentator etc type controller.

By way of a specific solution, the simplest option is a gain on the controller inputs, each provided to scale the output based on the bicycle or other vehicle model. The gain outputs are then added together to form the steering demand signal which can be represented by steering wheel position demand or steering wheel velocity demand.

Similarly steering control function provides an output of steering torque based upon the inputs of steering wheel position and/or velocity when compared to the steering demand.

Activation Control

The activation control illustrated in Fig. 7 comprises three separate sections:

(i) Activation Logic 44 which controls the point at which the controller starts by setting an activation flag high. It also stops the controller by setting the activation flag low.

(ii) Deactivation logic 46 which detects the necessary conditions for deactivation of the controller. When the required conditions are met, it sends a signal to the activation logic 44.

(iii) Fade Control 48 which produces a gain value between 0 and 1 that is used to fade the inputs and outputs from the controller in and out as the controller is switched on and off. The purpose of this is to effect bumpless transfer from controller off to controller on and back to controller off. At no time should the controller produce sudden changes in the steering torque other than those intended for the correction of oversteer.

(i) Activation Logic

The activation logic 44 merely comprises a threshold oversteer value and an SR latch 50 as shown in Fig. 8. When the oversteer signal exceeds the threshold, the latch 50 is set, and remains set until the deactivation flag triggers a reset.

(ii) Deactivation Logic

As indicated in Fig. 9, two conditions must be satisfied before the deactivation flag goes high. They are:

1. Oversteer flag should not be set. If the oversteer signal is higher than the threshold that causes activation of the controller, then the controller should not be reset.

2. Yaw acceleration should be less than a threshold. A high yaw acceleration means that there is a large yaw moment present on the vehicle, which is possibly unstable. Therefore, the yaw acceleration must fall below a threshold before the activation flag can be reset.

(iii) Fade Control

As illustrated in Fig.10, the fade control block produces a gain between 0 and 1 that fades the control effort generated by the steering controller in and out in a smooth manner. When the activation flag is high, the output from the fade out gain is zero and the input to an integrator 52 is the value of the fade in gain. As the fade in gain is positive, the integrator 52 ramps up to 1 where it is saturated which allows the torque generated by the steering controller to be gradually added to the steering system. When the activation flag falls to zero, the output from the fade in gain falls to zero, the input to the integrator 52 is now the value of the fade out gain. As the fade in gain is negative, the integrator ramps down to zero where it saturates, gradually removing the effect of the controller torque from the steering system.

The rate at which the torque is faded, can be adjusted by selection of the fade in and fade out gains.

The aforegoing system is capable of achieving a number of advantageous operating characteristics, including one or more of the following:

(1) Hands off stability is obtained in that the vehicle is stable even if the driver removes their hands from the steering wheel. The steering automatically attains the correct steer angle.

(2) Vehicle stability is enhanced in that, for a vehicle fitted with VSC, both the steering and braking are acting to stabilise the vehicle, so that the vehicle should be returned to a safe operating region more rapidly.

(3) Less VSC (Vehicle Stability Control) intervention is necessary.

The VSC causes the vehicle to slow down. By arranging for the steering control to activate ahead of the VSC system, there will be less VSC action. The VSC could also be tuned to allow more oversteer as the steering control will be active.

(4) The system is applicable to cheaper vehicles in that stability control can be added to a less expensive vehicle where VSC would be a prohibitive extra cost but where power steering is standard.

(5) Smooth intervention is achieved in that the controller torque is progressively added to the power assist torque so that the control intervention is not objectionable to the driver.

(6) The degree of intervention can be tunable in that by tuning of the control gains and saturation elements, the type of control can be varied from one that guides the driver into making the correct steering input to a full interventionist system where the driver can not override the steering.

(7) There is minimal additional hardware necessary in that there are minimal additional hardware requirements beyond the base vehicle. Two cheap lateral acceleration sensors may be all that is required, if VSC is not actually fitted to the vehicle.

**Claims**

1. A vehicle steering system comprising:

   oversteer estimation means (10) to determine whether the vehicle is experiencing an oversteer condition;
   steering control means (14) to determine a compensatory torque so as to support the driver in reducing the vehicle yaw rate to zero and thereby in removing the oversteer condition; and
   activation means (12) enabled when said oversteer condition is detected to fade in and fade out said compensatory torque so as to achieve a bumpless transfer of additional torque demand that is applied to the driver's steering demand.

2. A system as claimed in claim 1, wherein said oversteer estimation means (10) is adapted to derive an estimation of the tendency of the vehicle to oversteer based upon estimates of vehicle yaw rate which are compared with measurements of actual vehicle yaw rate to provide a yaw rate error which is used as a measure of oversteer present on the vehicle.

3. A system as claimed in claim 2, including a closed loop observer (16) having yaw rate feedback which is arranged such that, when the vehicle starts to oversteer, a non-linear region is entered and the previously existing linear estimate diverges from the feedback signal whereby the magnitude of the vehicle yaw rate is greater than the magnitude of the estimated yaw rate, thereby producing a negative yaw rate error which is used to generate a proportional signal indicative of the magnitude of the oversteer.

4. A system as claimed in claim 1, wherein said oversteer estimation means (10) is adapted to derive an estimation of the tendency of the vehicle to oversteer using measurements from lateral acceleration sensors placed in the front and rear axles of the vehicle.

5. A system as claimed in claim 4, wherein signals corresponding to the lateral accelerations measured at the front and rear axles are passed through a phase detection device (20), the phase difference being used for calculation of the magnitude of oversteer.

6. A system as claimed in claim 5, wherein the state of the vehicle is formed from $\lambda = \Theta_{th} - \Theta$
   where $\lambda$ is the vehicle state, $\Theta_{th}$ is a phase lag threshold and $\Theta$ is the phase difference between the two lateral acceleration sensors, positive values of $\lambda$ indicating that the vehicle is in oversteering and $\lambda$ is proportional to the amount of oversteer present.

7. A system as claimed in claim 1, wherein said oversteer estimation means (10) is adapted to derive an estimation of the tendency of the vehicle to oversteer based upon two vehicle models (22, 24) representing an understeering and an oversteering vehicle which are compared to provide an indication of vehicle oversteer magnitude.

8. A system as claimed in claim 7 wherein difference in dynamics between the two models (22, 24) is achieved by altering the tyre cornering stiffness in the models, reducing the front tyre stiffness in one model creating an understeering vehicle and reducing the rear tyre stiffness in the other model creating an oversteering vehicle, and comprising comparators which calculate the error between the measured lateral acceleration and estimated lateral acceleration at that axle for each model, based on:

$$\lambda_f = \left| A_{fm} - A_{fu} \right| - \left| A_{fm} - A_{fo} \right|$$

where

$A_{fu}$ = Front Axle Lat Acc Estimated from Understeer Model

$A_{ru}$ = Rear Axle Lat Acc Estimated from Understeer Model

$A_{fo}$ = Front Axle Lat Acc Estimated from Oversteer Model

$A_{ru}$ = Rear Axle Lat Acc Estimated from Oversteer Model

$A_{fm}$ = Front Axle Lat Acc Measured from Sensor

$A_{rm}$ = Rear Axle Lat Acc Measured from Sensor

this giving two values for the vehicle state which are added together to produce an overall vehicle stability factor $\lambda$, positive values of which are indicative of vehicle oversteer.

9. A system as claimed in claim 1, wherein said oversteer estimation means (10) is adapted to derive an estimation of the tendency of the vehicle to oversteer based upon a percentage of the VSC threshold at which brake intervention in oversteer occurs.

10. A system as claimed in any of claims 1 to 9, wherein said steering control means (14) is adapted to control the steering by applying a pulse input or "nudge" to indicate to the driver the correct time and direction to apply steering control.

11. A system as claimed in claim 10 wherein a signal is arranged to be generated in a nudge controller (30) if the vehicle yaw rate error is detected to be greater than a predetermined threshold, this signal being used to trigger a latch (32), the output of which sets an integrator (34) ramping, said signal also being used to generate a torque demand signal which is fed to the steering system to initiate the start of the "nudge", saturation of the integrator (34) resetting the latch (32) and ending the "nudge".

12. A system as claimed in any of claims 1 to 9 wherein said steering control means (14) is adapted to control the steering by means of closed loop control of the steering wheel velocity.

13. A system as claimed in claim 12, wherein a PD controller (38) is implemented on the vehicle yaw rate error to generate a steering rate demand which is compared with a scaled version of the steering wheel velocity to produce an error signal, a second PD controller (40) then providing a signal which attempts to move the steering wheel with a desired direction and velocity to correct the oversteer.

14. A system as claimed in any of claims 1 to 13, wherein said activation means (12) is adapted to fade in the compensatory torque when it has decided that the oversteer has exceeded limits and to fade out the compensatory torque once the oversteer has returned to an acceptable value.

15. A system as claimed in any of claims 1 to 14, wherein said activation means (12) comprises activation logic (44) which is adapted to control the point at which the steering control means (14) starts, deactivation logic (46) which detects conditions for deactivation of the steering control means, and a fade control (48) which fades the inputs and outputs from the steering control means in and out as the steering control means is switched on and off.

16. A system as claimed in claim 15, wherein the activation logic comprises a threshold oversteer value and a latch (50) arranged such that when the oversteer signal exceeds the threshold, the latch is set and remains set until a deactivation flag triggers a reset.

17. A system as claimed in claim 15 or 16 wherein the fade control comprises an integrator (52) which upon detection of an activation flag being high, is arranged to ramp up to allow the torque generated by the steering control means to be gradually added to the steering system, but which, on detection of the activation flag becoming low, ramps down to gradually remove the effect of the compensatory torque from the steering system.

**Patentansprüche**

1. Fahrzeuglenksystem, umfassend:

ein Übersteuerungsschätzmittel (10) zum Bestimmen, ob das Fahrzeug einen Übersteuerungszustand erfährt;
ein Lenksteuermittel (14) zum Bestimmten eines Ausgleichsdrehmoments, um so den Fahrer beim Senken der Fahrzeuggiergeschwindigkeit auf Null und **dadurch** beim Entfernen des Übersteuerungszustands zu unterstützen; und
Aktivierungsmittel (12), die freigegeben werden, wenn der Übersteuerungszustand ermittelt wird, um Fade-in und Fade-out des Ausgleichsdrehmoments auszuführen, um so stoßfreien Übergang von zusätzlicher Drehmomentanforderung zu erreichen, die auf die Lenkanforderung des Fahrers angewendet wird.

2. System nach Anspruch 1, bei dem das Übersteuerungsschätzmittel (10) angepasst ist, um eine Schätzung der Tendenz des Fahrzeugs zu Übersteuerung basierend auf Schätzungen der Fahrzeuggiergeschwindigkeit abzuleiten, die mit Messungen der tatsächlichen Fahrzeuggiergeschwindigkeit verglichen werden, um einen Giergeschwindigkeitsfehler zu liefern, der als eine Messung von an dem Fahrzeug vorhandener Übersteuerung verwendet wird.

3. System nach Anspruch 2, das einen Beobachter (16) eines geschlossenen Regelkreises mit einer Giergeschwindigkeitsrückmeldung aufweist, der so eingerichtet ist, dass, wenn das Fahrzeug beginnt, zu übersteuern, in einen nichtlinearen Bereich eingetreten wird, und die vorhergehende existierende lineare Schätzung von dem Rückmeldesignal abweicht, wodurch die Größe der Fahrzeuggiergeschwindigkeit größer als die Größe der geschätzten Giergeschwindigkeit ist, wodurch ein negativer Giergeschwindigkeitsfehler erzeugt wird, der zum Erzeugen eines die Größe der Übersteuerung anzeigenden proportionalen Signals verwendet wird.

4. System nach Anspruch 1, bei dem das Übersteuerungsschätzmittel (10) angepasst ist, um eine Schätzung der Tendenz des Fahrzeugs zu Übersteuerung unter Verwendung von Messungen von Seitenbeschleunigungssensoren abzuleiten, die in den Vorder- und Hinterachsen des Fahrzeugs platziert sind.

5. System nach Anspruch 4, bei dem Signale, die den an den Vorder- und Hinterachsen gemessenen Seitenbeschleunigungen entsprechen, durch eine Phasendetektionseinrichtung (20) geleitet werden, wobei die Phasendifferenz zur Berechnung der Größe von Übersteuerung verwendet wird.

6. System nach Anspruch 5, bei dem der Zustand des Fahrzeugs von $\lambda = \Theta_{th} - \Theta$ gebildet wird,
wobei $\lambda$ der Fahrzeugzustand ist, $\Theta_{th}$ ein Phasenverzögerungsschwellenwert ist und $\Theta$ die Phasendifferenz zwischen den beiden Seitenbeschleunigungssensoren ist, wobei positive Werte von $\lambda$ anzeigen, dass das Fahrzeug sich in Übersteuerung befindet, und $\lambda$ proportional zu der Größe vorhandener Übersteuerung ist.

7. System nach Anspruch 1, bei dem das Übersteuerungsschätzmittel (10) angepasst ist, um eine Schätzung der Tendenz des Fahrzeugs zu Übersteuerung basierend auf zwei Fahrzeugmodellen (22, 24) abzuleiten ist, die ein untersteuerndes und ein übersteuerndes Fahrzeug darstellen, welche verglichen werden, um eine Anzeige der Fahrzeugübersteuerungsgröße zu liefern.

8. System nach Anspruch 7, bei dem die Differenz in Dynamik zwischen den beiden Modellen (22, 24) durch Ändern der Reifenkurvensteifheit in den Modellen erreicht wird, wobei Reduzieren der Vorderreifensteifheit in einem Modell ein untersteuerndes Fahrzeug erzeugt und Reduzieren der Hinterreifensteifheit in dem anderen Modell ein übersteuerndes Fahrzeug erzeugt, und das Vergleichseinrichtungen aufweist, die den Fehler zwischen der gemessenen Seitenbeschleunigung und geschätzter Seitenbeschleunigung an dieser Achse für jedes Modell berechnen aufgrund von:

$$\lambda_f = \left| A_{fm} - A_{fu} \right| - \left| A_{fm} - A_{fo} \right|$$

wobei

$A_{fu}$ = Vorderachsenseitenbeschleunigung geschätzt von Untersteuerungsmodell
$A_{ru}$ = Hinterachsenseitenbeschleunigung geschätzt von Untersteuerungsmodell
$A_{fo}$ = Vorderachsenseitenbeschleunigung geschätzt von Übersteuerungsmodell
$A_{ru}$ = Hinterachsenseitenbeschleunigung geschätzt von Übersteuerungsmodell
$A_{fm}$ = Vorderachsenseitenbeschleunigung gemessen von Sensor
$A_{rm}$ = Hinterachsenseitenbeschleunigung gemessen von Sensor ist,

wobei dies zwei Werte für den Fahrzeugzustand liefert, die zusammenaddiert werden, um einen Gesamtfahrzeugsstabilitätsfaktor $\lambda$ zu erhalten, dessen positive Werte Fahrzeugübersteuerung anzeigen.

9. System nach Anspruch 1, bei dem das Übersteuerungsschätzmittel (10) angepasst ist, um eine Schätzung der Tendenz des Fahrzeugs zu Übersteuerung basierend auf einem Prozentanteil des VSC-Schwellenwerts abzuleiten, bei dem Bremseingreifen bei Übersteuerung erfolgt.

10. System nach einem der Ansprüche 1 bis 9, bei dem das Lenksteuermittel (14) angepasst ist, um das Lenken durch Anlegen einer Impulseingabe oder "Andeutung" zu steuern, um dem Fahrer die korrekte Zeit und Richtung zum Anwenden der Lenksteuerung zu zeigen.

11. System nach Anspruch 10, bei dem ein Signal eingerichtet ist, um in einem Andeutungskontroller (30) erzeugt zu werden, wenn ermittelt wird, dass der Fahrzeuggiergeschwindigkeitsfehler größer als ein vorbestimmter Schwellenwert ist, wobei dieses Signal zum Auslösen eines Latch (32) verwendet wird, dessen Ausgabe einen Integrator (34) hoch setzt, wobei das Signal auch zum Erzeugen eines Drehmomentanforderungssignals verwendet wird, das dem Lenksystem zugeführt wird, um den Start der "Andeutung" zu initiieren, wobei Sättigung des Integrators (34) das Latch (32) zurückstellt und die "Andeutung" beendet.

**12.** System nach einem der Ansprüche 1 bis 9, bei dem das Lenksteuermittel (14) angepasst ist, um die Lenkung mittels geschlossener Regelkreissteuerung der Lenkradgeschwindigkeit zu steuern.

**13.** System nach Anspruch 12, bei dem ein PD-Kontroller (38) auf den Fahrzeuggiergeschwindigkeitsfehler ausgeführt wird, um eine Lenkratenanforderung zu erzeugen, die mit einer skalierten Version der Lenkradgeschwindigkeit verglichen wird, um ein Fehlersignal zu erzeugen, wobei ein zweiter PD-Kontroller (40) dann ein Signal liefert, das versucht, das Lenkrad mit einer gewünschten Richtung und Geschwindigkeit zum Korrigieren der Übersteuerung zu bewegen.

**14.** System nach einem der Ansprüche 1 bis 13, bei dem das Aktivierungsmittel (12) angepasst ist, um Fade-in des Ausgleichsdrehmoment auszuführen, wenn es entschieden hat, dass Übersteuerung Grenzen überschritten hat, und Fade-out des Ausgleichsdrehmoments auszuführen, wenn die Übersteuerung zu einem akzeptablen Wert zurückgekehrt ist.

**15.** System nach einem der Ansprüche 1 bis 14, bei dem das Aktivierungsmittel (12) Aktivierungslogik (44), die angepasst ist, um den Punkt zu steuern, an dem das Lenksteuermittel (14) startet, Deaktivierungslogik (46), die Bedingungen zur Deaktivierung des Lenksteuermittels detektiert, und eine Fade-Steuerung (48) aufweist, die Fade-in und Fade-out der Eingaben und Ausgaben von dem Lenksteuermittel ausführt, wenn das Lenksteuermittel ein- und ausgeschaltet wird.

**16.** System nach Anspruch 15, bei dem die Aktivierungslogik einen Übersteuerungsschwellenwert und ein so eingerichtetes Latch (50) aufweist, dass, wenn das Übersteuerungssignal die Schwelle überschreitet, das Latch eingestellt wird und eingestellt bleibt, bis ein Deaktivierungsmarkierungszeichen eine Rückstellung auslöst.

**17.** System nach Anspruch 15 oder 16, bei dem die Fade-Steuerung einen Integrator (52) aufweist, der bei Ermittlung eines Aktivierungsmarkierungszeichens, das hoch ist, eingerichtet ist, um hoch zu stellen zum Zulassen, dass das durch das Lenksteuermittel erzeugte Drehmoment nach und nach dem Lenksystem hinzugefügt wird, der jedoch, bei Ermittlung, dass das Aktivierungsmarkierungszeichen niedrig wird, herunter stellt, um die Auswirkung des Ausgleichsdrehmoments von dem Lenksystem schrittweise zu entfernen.

## Revendications

**1.** Système de direction de véhicule campartant :

un moyen d'estimation du survirage (10) permettant de déterminer si le véhicule est confronté à une situation de survirage ;
un moyen de commande de direction (14) permettant de déterminer un couple de compensation de telle manière à assister le conducteur en vue de réduire la vitesse de lacet du véhicule à zéro et, de ce fait, en vue d'éliminer la situation de survirage ; et
un moyen d'activation (12) activé quand ladite situation de survirage est détectée afin d'augmenter et de diminuer progressivement ledit couple de compensation de telle manière à réaliser un transfert sans secousse de la demande supplémentaire en couple qui est appliquée en fonction de la demande de direction du conducteur.

**2.** Système selon la revendication 1, dans lequel ledit moyen d'estimation du survirage (10) est adapté pour dériver une estimation de la tendance qu'a le véhicule à survirer d'après des estimations de la vitesse de lacet du véhicule qui sont comparées aux mesures de la vitesse de lacet réelle du véhicule afin d'aboutir à une erreur de vitesse de lacet qui est utilisée en tant que mesure du survirage présent sur le véhicule.

**3.** Système selon la revendication 2, comprenant un observateur en boucle fermée (16) ayant un retour de vitesse de lacet qui est prévu de telle manière que, lorsque le véhicule commence à survirer, une région non linéaire est entrée et l'estimation linéaire précédemment existante diverge du signal de retour, ce par quoi l'ampleur de la vitesse de lacet du véhicule est supérieure à l'ampleur de la vitesse de lacet estimée, produisant de ce fait une erreur de vitesse de lacet négative qui est utilisée pour produire un signal proportionnel indiquant l'ampleur du survirage.

**4.** Système selon la revendication 1, dans lequel ledit moyen d'estimation du survirage (10) est adapté pour dériver une estimation de la tendance qu'a le véhicule à survirer en utilisant les mesures provenant de capteurs d'accélération latérale placés sur les essieux avant et arrière du véhicule.

**5.** Système selon la revendication 4, dans lequel les signaux correspondant aux accélérations latérales mesurées au niveau des essieux avant et arrière sont passés au travers d'un dispositif de détection de phase (20), la différence de phase étant utilisée pour le calcul de l'ampleur du survirage.

6. Système selon la revendication 5, dans lequel l'état du véhicule est formé d'après $\lambda = \Theta_{th} - \Theta$ où $\lambda$ est l'état du véhicule, $\Theta_{th}$ est le seuil de retard de phase et $\Theta$ est la différence de phase entre les deux capteurs d'accélération latérale, des valeurs positives de $\lambda$ indiquant que le véhicule est en situation de survirage et $\lambda$ est proportionnel à la quantité de survirage présent.

7. Système selon la revendication 1, dans lequel ledit moyen d'estimation du survirage (10) est adapté pour dériver une estimation de la tendance qu'a le véhicule à survirer d'après deux modèles du véhicule (22, 24) représentant un véhicule en situation de sous-virage et un véhicule en situation de survirage qui sont comparés afin de fournir une indication de l'ampleur du survirage du véhicule.

8. Système selon la revendication 7, dans lequel la différence en termes de dynamique entre les deux modèles (22, 24) est réalisée en modifiant la raideur des pneus en virage dans les modèles, la réduction de la raideur des pneus avant dans un modèle créant un véhicule en situation de sous-virage et la réduction de la raideur des pneus arrière dans l'autre modèle créant un véhicule en situation de survirage, et en comprenant des comparateurs qui calculent l'erreur entre l'accélération latérale mesurée et l'accélération latérale estimée au niveau de cet essieu pour chaque modèle, d'après :

$$\lambda_f = |\, A_{fm} - A_{fu}\,| - |\, A_{fm} - A_{fo}\,|$$

où

$A_{fu}$ = Accélération latérale de l'essieu avant estimée d'après le modèle de sous-virage
$A_{ru}$ = Accélération latérale de l'essieu arrière estimée d'après le modèle de sous-virage
$A_{fo}$ = Accélération latérale de l'essieu avant estimée d'après le modèle de survirage
$A_{ru}$ = Accélération latérale de l'essieu arrière estimée d'après le modèle de survirage
$A_{fm}$ = Accélération latérale de l'essieu avant mesurée d'après le capteur
$A_{rm}$ = Accélération latérale de l'essieu arrière mesurée d'après le capteur

ceci donnant deux valeurs pour l'état du véhicule qui sont additionnées pour produire un facteur de stabilité générale du véhicule $\lambda$, des valeurs positives de celui-ci indiquant un véhicule en situation de survirage.

9. Système selon la revendication 1, dans lequel ledit moyen d'estimation du survirage (10) est adapté pour dériver une estimation de la tendance qu'a le véhicule à survirer d'après un pourcentage du seuil de commande de stabilité du véhicule (CSV) auquel il y a intervention du frein en situation de survirage.

10. Système selon l'une quelconque des revendications 1 à 9, dans lequel ledit moyen de commande de direction (14) est adapté pour commander la direction par l'application d'une entrée de type impulsion ou d'un « coup de coude » afin d'indiquer au conducteur le bon moment et la bonne direction pour l'application de la commande de direction.

11. Système selon la revendication 10, dans lequel un signal est prévu être produit dans un contrôleur de coups de coude (30) si l'erreur de vitesse de lacet du véhicule est détectée comme étant supérieure à un seuil prédéterminé, ce signal étant utilisé pour déclencher un verrou (32) dont la sortie entraîne un intégrateur (34) à monter en puissance, ledit signal étant également utilisé pour produire un signal de demande de couple qui est acheminé jusqu'au système de direction afin de lancer le début du « coup de coude », la saturation de l'intégrateur (34) réenclenchant le verrou (32) et mettant fin au « coup de coude ».

12. Système selon l'une quelconque des revendications 1 à 9, dans lequel ledit moyen de commande de direction (14) est adapté pour commander la direction par le biais d'une commande en boucle fermée de la vitesse du volant de direction.

13. Système selon la revendication 12, dans lequel un contrôleur PD (38) est mis en oeuvre sur l'erreur de vitesse de lacet du véhicule afin de produire une demande de vitesse de direction qui est comparée à une version réduite de la vitesse du volant de direction en vue de produire un signal d'erreur, un deuxième contrôleur PD (40) fournissant alors un signal qui tente de déplacer le volant de direction dans une direction souhaitée et à une vitesse souhaitée pour corriger le survirage.

14. Système selon l'une quelconque des revendications 1 à 13, dans lequel ledit moyen d'activation (12) est adapté pour augmenter progressivement le couple de compensation lorsqu'il a décidé que le survirage a dépassé les limites et pour diminuer progressivement le couple de compensation une fois que le survirage est retourné à une valeur acceptable.

15. Système selon l'une quelconque des revendications 1 à 14, dans lequel ledit moyen d'activation (12) comporte une logique d'activation (44) qui est adaptée pour commander le moment auquel le moyen de commande de direction (14) démarre, une logique de désactivation (46) qui détecte les conditions de désactivation du moyen de commande de direction, et une commande d'augmentation progressive et de diminution progressive (48) qui augmente progressivement et diminue progressivement les entrées et les sorties en provenance du moyen de commande de direction en fonction de la mise sous tension et de la mise hors tension du moyen de commande de direction.

**16.** Système selon la revendication 15, dans lequel la logique d'activation comporte une valeur de seuil de survirage et un verrou (50) prévus de telle manière que lorsque le signal de survirage dépasse le seuil, le verrou est enclenché et reste enclenché jusqu'à ce qu'un indicateur de désactivation déclenche un réenclenchement.

**17.** Système selon la revendication 15 ou la revendication 16, dans lequel la commande d'augmentation progressive et de diminution progressive comporte un intégrateur (52) qui, lors de la détection d'un indicateur d'activation haut, est prévu pour monter en puissance afin de permettre au couple produit par le moyen de commande de direction d'être ajouté graduellement au système de direction, mais qui, lors de la détection d'un indicateur d'activation en baisse, descend en puissance afin d'éliminer graduellement l'effet du couple de compensation en provenance du système de direction.

**FIG.1.**

VEHICLE DATA → OVERSTEER ESTIMATION [10] → ACTIVATION LOGIC [12] → FADE GAIN

YAW RATE
STEERING VELOCITY
LATERAL ACCEL.
STEERING WHEEL ANGLE
SLIP ANGLE
→ STEERING CONTROLLER [14] → (X) → ADDITIONAL STEERING TORQUE

HANDWHEEL ANGLE
LONGITUDINAL VELOCITY
YAW RATE
→ CLOSED LOOP OBSERVER [16] → ABS → (+) YAW RATE ESTIMATE / YAW RATE ERROR → LOGIC [18] → OVERSTEER ESTIMATE

ACTUAL YAW RATE → ABS → (−)

**FIG.2.**

FRONT AXLE LATERAL ACCELERATION →

PHASE DETECTION [20]

REAR AXLE LATERAL ACCELERATION →

→ PHASE ANGLE

**FIG.3.**

**FIG.4.**

STEER ANGLE AND VEHICLE SPEED

UNDERSTEER MODEL 22

OVERSTEER MODEL 24

$A_{fu}$

$A_{ru}$

$A_{fo}$

$A_{ro}$

$A_{fm}$

COMPARATOR 26

$A_{rm}$

COMPARATOR 28

$\lambda_f$

$\lambda_r$

+ +

VEHICLE STATE, $\lambda$

**FIG.5.**

O

+ −

ACTUAL YAW RATE

YAW ERROR PD CONTROLLER 30

IS INPUT GREATER THAN THRESHOLD? 32

SIGN

SR LATCH

S

Q

$\bar{Q}$

INTEGRATOR INPUT

INTEGRATOR RESET

LIMITED INTEGRATOR WITH THRESHOLD 34

SATURATION FLAG

GAIN 36

TORQUE DEMAND

NUDGE CONTROLLER

14

FIG.9.

OVERSTEER FLAG → NOT → AND → DEACTIVATION FLAG

YAW RATE → DISCRETE TIME DERIVATIVE → LOW PASS FILTER → ABS → IS INPUT LESS THAN YAW ACCEL. THRESHOLD ? → YAW ACCELERATION FLAG

OVERSTEER SIGNAL → ACTIVATION LOGIC → ACTIVATION FLAG → FADE CONTROL → FADE GAIN

44

RESET ← 46 → DEACTIVATION LOGIC ← YAW RATE

OVERSTEER FLAG → 48

FIG.7.

OVERSTEER SIGNAL → IS INPUT GREATER THAN THRESHOLD ? → OVERSTEER FLAG

S → SR LATCH → ACTIVATION FLAG

Q → DEACTIVATION FLAG

50

FIG.8.

DEMAND YAW RATE = 0 → + (−) → PD YAW RATE CONTROL → STEER RATE DEMAND LIMIT → + (−) → PD STEER RATE CONTROL → TORQUE LIMIT → TORQUE DEMAND

38

ACTUAL YAW RATE

STEER RATE DEMAND

STEERING VELOCITY → RATE GAIN

40

42

FIG.6.

EP 1 370 456 B1

EP 1 370 456 B1

IS INPUT
GREATER
THAN 0.5 ?

FADE IN
GAIN,

ACTIVATION
FLAG
(0,1)

IS INPUT
LESS
THAN 0.5 ?

FADE OUT
GAIN,

52

LIMITED
INTEGRATOR

FADE
GAIN

+

+

**FIG.10**

LAT. ACC.
YAW RATE
SLIP ANGLE

VEHICLE
CONTROLLER

STEERING
DEMAND

STEERING
CONTROL

TORQUE
LINK

TORQUE
DEMAND

STEERING
WHEEL
VELOCITY

STEERING
WHEEL
POSITION

**FIG.11.**

$\delta$ STEER ANGLE

YAW RATE

BICYCLE
MODEL

LATERAL
VELOCITY
$V_y$

$\tan \dfrac{V_y}{V_x}$

SIDESLIP

LONGITUDINAL
VELOCITY $V_x$

**FIG.12.**